(19) Europäisches Patentamt
European Patent Office
Office européen des brevets

(11) Veröffentlichungsnummer: **0 189 772 B1**

(12) **EUROPÄISCHE PATENTSCHRIFT**

(45) Veröffentlichungstag der Patentschrift: **03.04.91**

(51) Int. Cl.5: **C09B 1/40**, C09B 1/42, C09B 1/516

(21) Anmeldenummer: **86100348.1**

(22) Anmeldetag: **13.01.86**

(54) **Verfahren zur Herstellung von Oxamiden.**

(30) Priorität: **26.01.85 DE 3502623**

(43) Veröffentlichungstag der Anmeldung:
**06.08.86 Patentblatt 86/32**

(45) Bekanntmachung des Hinweises auf die Patenterteilung:
**03.04.91 Patentblatt 91/14**

(84) Benannte Vertragsstaaten:
**CH DE FR GB LI**

(56) Entgegenhaltungen:
**EP-A- 0 132 757**
**DE-C- 270 579**
**FR-A- 399 495**
**GB-A- 231 532**

(73) Patentinhaber: **BAYER AG**
**W-5090 Leverkusen 1 Bayerwerk(DE)**

(72) Erfinder: **Steinbeck, Werner, Dr.**
**Wolfskaul 8**
**W-5000 Köln 80(DE)**
Erfinder: **Stawitz, Josef Walter, Dr.**
**Gerstenkamp 21**
**W-5000 Köln 80(DE)**

**EP 0 189 772 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Oxamiden durch Umsetzung von Aminoanthrachinonen mit Oxalsäureestern.

Stark basische Amine lassen sich bekanntlich leicht mit Oxalsäureestern zu den entsprechenden Oxamiden kondensieren (F. Möller in Houben-Weyl, Bd. 11/2, S. 21, 4. Auflage, 1958).

Die sehr schwach basischen Aminoanthrachinone ($pK_A < 1$) werden üblicherweise mit Oxalylchlorid in inerten organischen Lösungsmitteln zu den entsprechenden Dianthrachinonyloxamiden umgesetzt.

Das benötigte Oxalylchlorid läßt sich aus wasserfreier Oxalsäure und $PCl_5$ und anschließende Destillation erhalten.

Bekanntlich ist Oxalylchlorid eine aggressive Flüssigkeit, die in der Technik hinsichtlich Herstellung, Lagerung, Transport und Weiterverarbeitung spezielle Gefäßmaterialien sowie einen hohen Sicherheitsaufwand erfordert.

Nach der DE-PS 224 808 lassen sich Aminoanthrachinone mit Oxalsäure zu Oxamidsäuren verschmelzen und anschließend mit weiterem Aminoanthrachinon in Gegenwart von $PCl_5$ zu Dianthrachinonyloxamiden umsetzen. Dieses aufwendige Zweistufenverfahren liefert insbesondere bei Einsatz substituierter Aminoanthrachinone Produkte in deutlich geringerer Ausbeute und Reinheit als das Oxalylchloridverfahren.

Die DE-PS 270 579 beschreibt Umsetzungen von Oxalsäureestern mit Aminoanthrachinonen in Alkohol in Gegenwart von molaren Mengen Alkoholat. Nach Aussagen des Patents sind die entstehenden Produkte nicht die erwarteten Dianthrachinonyloxamide. Die Nacharbeitung mit Aminobenzoylaminoanthrachinon ergab, daß weitgehende Verseifung der Benzoylamino-Gruppe und, wenn überhaupt, nur geringe Umsetzung im gewünschten Sinne eintritt.

Die ältere EP-A 0 132 757 beschreibt Verfahren zur Herstellung von Oxamiden durch Umsetzung von Oxalsäureestern mit Aminoanthrachinonen in erster Linie monobenzoylierten Diaminoanthrachinonen oder den Aminen kondensierter Anthrachinone.

Das neue Verfahren eröffnet einen besonders wirtschaftlichen Weg zur Herstellung von acylaminogruppenhaltigen, insbesondere benzoylaminogruppenhaltigen Dianthrachinonyloxamiden. So war insbesondere der Küpenfarbstoff der Formel

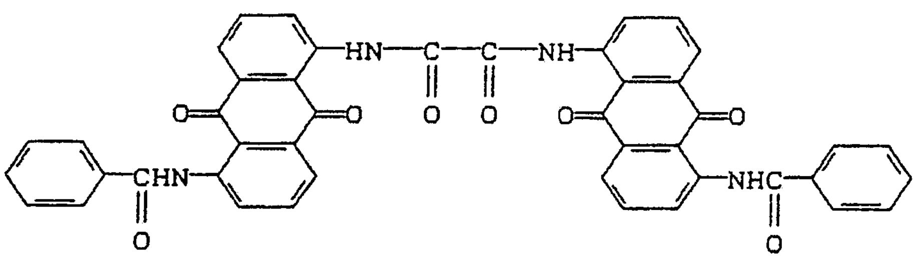

bislang durch Umsetzung von 1-Amino-5-benzoylaminoanthrachinon mit Oxalylchlorid nur in insgesamt schlechten Ausbeuten zugänglich, da die Anthrachinonverbindung, die durch halbseitige Acylierung von 1,5-Diaminoanthrachinon hergestellt wird, nur mit 60 %iger Ausbeute entsteht (Ullmanns Encyclopädie der technischen Chemie, 4. Aufl., Bd. 7, S. 593; Verlag Chemie, Weinheim, 1973; siehe auch GB-A-231532).

Das erfindungsgemäße Verfahren betrifft die Herstellung von Oxamiden der Formel (I)

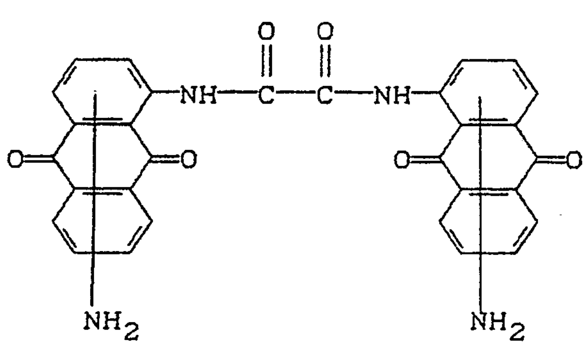

(I)

in der
die $NH_2$-Gruppen in 4-, 5- oder 8-Stellung am Anthrachinonring stehen und ist dadurch gekennzeichnet, daß man Oxalsäureester mit Aminoanthrachinonen der Formel (II)

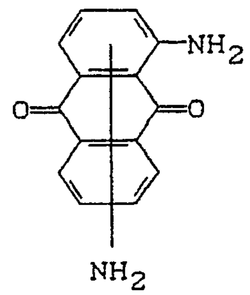

(II)

in der
die $NH_2$-Gruppe in 4-, 5- oder 8-Stellung am Anthrachinonring steht,
in Gegenwart eines sekundären oder tertiären Amins, das stärker basisch ist als die Aminoanthrachinone, als Katalysator und gegebenenfalls in Gegenwart eines aromatischen oder hydroaromatischen Kohlenwasserstoffs, eines Amids oder Sulfons als Lösungsmittel, umsetzt.

Vorzugsweise arbeitet man bei Temperaturen von 100 bis 220 °C, besonders bevorzugt bei 140 bis 200 °C.

Als Oxalsäureester werden vorzugsweise die Dialkylester wie Oxalsäuredi-n-propylester, Oxalsäuredi-i-propylester, Oxalsäuredi-n-butylester, Oxalsäuredi-i-butylester, besonders bevorzugt Oxalsäurediethylester und Oxalsäuredimethylester eingesetzt.

Vorzugsweise dient das neue Verfahren zur Herstellung von symmetrischen Oxamiden.

Individuelle Beispiele für Ausgangsamine der Formel (II) sind:

1,4-Diaminoanthrachinon, 1,5-Diaminoanthrachinon, 1,8-Diaminoanthrachinon.

Die genannten Ausgangsamine können erfindungsgemäß auch als Gemische untereinander eingesetzt werden.

Als Katalysatoren können in das erfindungsgemäße Verfahren die verschiedenartigsten sekundären und tertiären Amine eingesetzt werden.

Beispielhaft seien genannt:

Sekundäre und tertiäre Amine der Formel

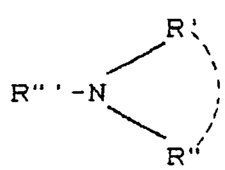

in der

R', R" und R"' Wasserstoff, $C_1$-$C_6$-Alkyl, $C_1$-$C_6$-Hydroxyalkyl, $C_1$-$C_6$-Alkoxy-$C_1$-$C_6$-alkyl, Aralkyl, insbesondere Phenyl-$C_1$-$C_6$-alkyl; Aryl, insbesondere Phenyl und Naphthyl, Heteroaryl bezeichnen können oder R', R" zusammen einen $C_2$-$C_6$-Alkylidenrest bilden können,

Weiterhin können als Katalysatoren heteroaromatische Amine wie Pyridin, Picoline, Chinolin, Methylchinoline und Imidazol allein oder in Mischung eingesetzt werden.

Folgende individuelle Amine seien beispielhaft genannt: Dimethylamin, Diethylamin, Dipropylamin, Dibutylamin, Ethylpropylamin, Diethanolamin, Bis-(methoxypropyl)-amin, Di-i-propanolamin, Dibenzylamin, Methylbenzylamin, Piperidin, Trimethylamin, Triethylamin, Tripropylamin, Tributylamin, Triethanolamin, Tris-(methoxyethyl)-amin, N,N-Dimethylbenzylamin, N,N-Dimethylphenylamin, N-Methylpiperidin, N-Methylmorpholin, 1,8-Diazabicyclo-[5.4.0]undec-7-en (DBU), 1,5-Diazabicyclo [4.3.0]non-5-en (DBN), 1,4-Diazabicyclo [2.2.2]octan (DABCO), 4-N,N-Dimethylaminopyridin, Chinuklidin.

Bevorzugt werden als Katalysatoren tertiäre Amine, insbesondere Triethylamin, Tributylamin und 1,4-Diazabicyclo [2.2.0]octan eingesetzt.

Als Verdünnungsmittel für das erfindungsgemäße Verfahren kommen aromatische und hydroaromatische Kohlenwasserstoffe in Frage, die beispielsweise durch Halogen-, Nitro-oder Alkylgruppen substituiert sein können, sowie Amide und Sulfone.

Geeignete aromatische und hydroaromatische Kohlenwasserstoffe, die auch als Mischung eingesetzt werden können, sind beispielsweise Toluol, Xylole, Trimethylbenzole, Tetramethylbenzole, Isopropylbenzol, Isododecylbenzol, Dibenzyl, Diphenylmethan, Diphenyl, Diphenylether, 1,1-Diphenylethan, Dimethyldiphenyle, Tetralin, Dekalin, Naphthalin, Methylnaphthaline, Dimethylnaphthaline, Trimethylnaphthaline, Chlorbenzol, Dichlorbenzole, Trichlorbenzole, Chlortoluole, Chlornaphthaline, Dichlornaphthaline, Nitrobenzol, Sulfolan, Diphenylsulfon, N-Methylpyrrolidon.

Ganz besonders bevorzugt werden Nitrobenzol und 1,2-Dichlorbenzol verwendet.

Das Molverhältnis von Aminoanthrachinon zu Oxalsäureester beträgt vorzugsweise 2,0 : 1 bis 1,1 : 1, ganz besonders bevorzugt 1,8 : 1 bis 1,3 : 1.

Das Verdünnungsmittel wird vorzugsweise in einer Menge von 0,5 bis 10 Gew.-Teilen, bezogen auf das umzusetzende Amin oder Amingemisch eingesetzt. Die Menge richtet sich nach der gewählten Verfahrensweise, z,B, werden bei der Durchführung in einen Schaufeltrockner nach Art einer Backschmelze nur Mengen von 0,5 bis 3 Gew.-Teilen benötigt.

Bei der Aufarbeitung kann das Lösungsmittel z,B. durch Abdestillieren, gegebenenfalls unter vermindertem Druck oder durch Filtration, gegebenenfalls nach weiterer Ver dünnung mit einem geeigneten Lösungsmittel, welches so gewählt wird, daß es leicht durch fraktionierte Destillation wiedergewonnen werden kann, abgetrennt werden.

Das Katalysatoramin wird vorzugsweise in einer Menge von 0,5 bis 10 Gew.-%, besonders bevorzugt 1 bis 5 Gew.-%, bezogen auf das Gewicht des eingesetzten Oxalsäureesters, zugesetzt.

Die Reaktionszeit richtet sich nach der gewählten Reaktionstemperatur, nach der Reaktivität der umzusetzenden Aminoverbindungen und des eingesetzten Oxalsäureesters und liegt im allgemeinen zwischen 0,5 und ca` 20 Stunden. Bei Einsatz von Aminoanthrachinonen und Oxalsäuredimethylester ist in den meisten Fällen in 0,5 bis 4 Stunden bei 150 bis 160 °C vollständiger Umsatz zu erreichen,

Die umzusetzenden Aminoverbindungen und der Oxalsäureester können bei Raumtemperatur oder bei höherer Temperatur in das Lösungsmittel gemeinsam eingetragen und anschließend auf Reaktionstemperatur gebracht werden. Ohne Nachteil kann aber auch der Oxalsäureester bei der Reaktionstemperatur gegebenenfalls gelöst im jeweiligen Lösungsmittel der Schmelze zudosiert werden. Der Eintrag bzw. die Dosierung erfolgt z,B. innerhalb von 0,5 bis 4 Stunden. Anschließend wird bei der Reaktionstemperatur gerührt, bis z,B. dünnschichtchromatographisch das Aminoanthrachinon bzw, das Amin des kondensierten Anthrachinons nicht mehr nachzuweisen ist. Bei unzureichendem Umsatz kann auch eine Nachdosierung des Oxalsäureesters erfolgen.

Das katalytisch wirkende sekundäre oder tertiäre Amin wird bereits mit den anderen Einsatzmaterialien zu Anfang oder bei der Reaktionstemperatur zugesetzt.

Das beanspruchte Verfahren führt in einem Einstufenverfahren mit hoher Ausbeute zu Dianthrachinonyloxamiden hervorragender Qualität.

Als Vorzug des neuen Verfahrens ist anzusehen, daß als Ausgangsprodukt die einfach herstell-, lager- und dosierbaren Oxalsäureester, die zudem preisgünstig sind, eingesetzt werden.

Insbesondere eröffnet das neue Verfahren einen besonders wirtschaftlichen Weg zur Herstellung von Küpenfarbstoffen der Formel

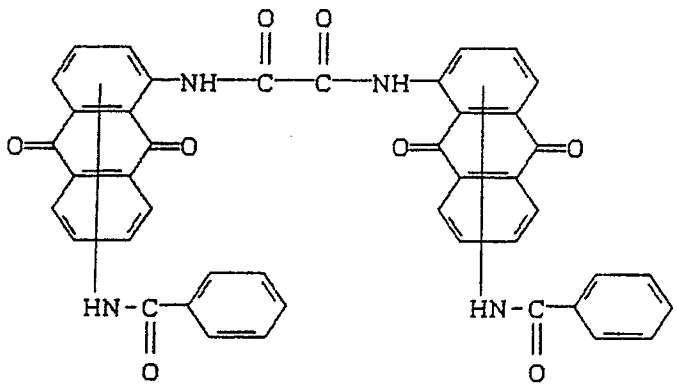

(III)

in welcher
die Benzoylaminogruppen in 4-, 5- oder 8-Stellung der Anthrachinonringe stehen

Die Erfindung betrifft daher weiterhin ein Verfahren zur Herstellung von Oxamiden der Formel (III), das dadurch gekennzeichnet ist, daß man Oxamide der Formel (I)

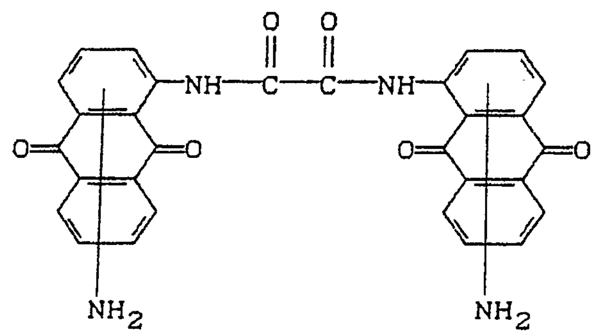

( I )

die nach dem oben beschriebenen Verfahren hergestellt wurden, in an sich bekannter Weise, vorzugsweise ohne Zwischenisolierung, benzoyliert. Die Benzoylierung erfolgt vorzugsweise bei 50 bis 200 °C, gegebenenfalls unter Zusatz eines Kondensationskatalysators wie Pyridin.

Ganz besonders vorteilhaft ist die Herstellung von

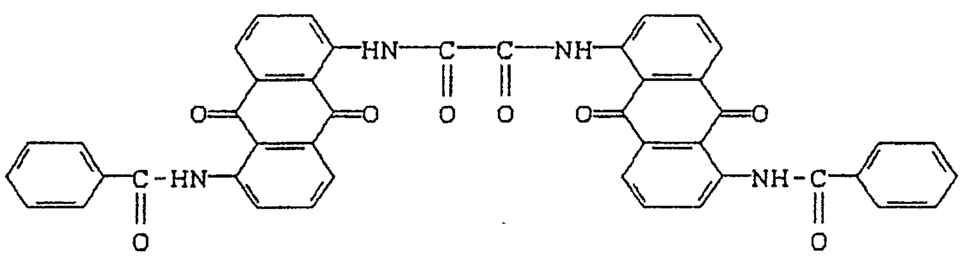

nach dem beschriebenen Verfahren.

## Beispiele

### Beispiel 1

238 g 1,5-Diamino-anthrachinon, 71 g Oxalsäuredimethylester und 3,2 g Triethylamin werden in 1600 g destilliertem Nitrobenzol unter Rühren auf 150 °C erhitzt und 3 Stunden bei dieser Temperatur gehalten. Dabei destilliert Methanol ab. Eine chromatographierte Probe zeigt noch höchstens 1 % vom eingesetzten 1,5-Diamino-anthrachinon an. Nach Zugabe von 163 g Benzoylchlorid wird die Reaktionsmischung weitere 5 Stunden bei 150 °C gerührt. Die Suspension wird dann bei 150 °C im Vakuum zur Trockene eingedampft. Erhalten werden 364 g eines Farbstoffs, der Baumwolle aus der Küpe in kräftigem gelben Ton färbt.

### Beispiel 2

Wird wie im Beispiel 1 verfahren, aber das 1,5-Diaminoanthrachinon durch die gleiche Menge 1,8-Diaminoanthrachinon ersetzt, so wird ein Produkt erhalten, das Baumwolle rotstichig gelb färbt.

### Beispiel 3

238 g 1,4-Diamino-anthrachinon, 66 g Oxalsäuredimethylester, 3,2 g Triethylamin und 2500 g trockenes

1,2-Dichlorbenzol werden 4 Stunden lang bei 150° C gerührt, bis nur noch eine Spur des Diaminoanthrachinons nachweisbar ist. Das Reaktionsgemisch wird mit 211 g Benzoylchlorid weitere 5 Stunden bei 150° C gehalten und nach Abkühlen auf 80° C filtriert. Der Rückstand wird mit 1,2-Dichlorbenzol und dann mit Methanol gewaschen und getrocknet. Es werden 345 g eines Farbstoffs erhalten, der Baumwolle aus der Küpe orange färbt.

## Ansprüche

1. Verfahren zur Herstellung von Oxamiden der Formel (I)

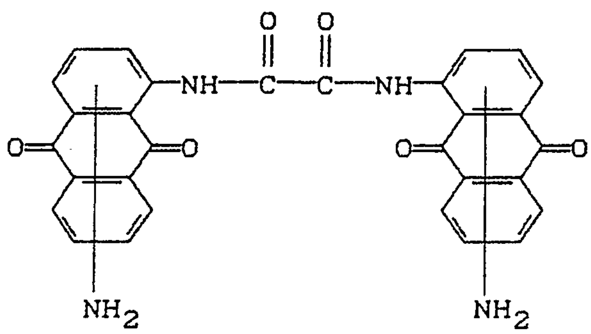

(I)

in der
die $NH_2$-Gruppen in 4-, 5- oder 8-Stellung am Anthrachinonring stehen,
dadurch gekennzeichnet, daß man Oxalsäureester mit Aminoanthrachinonen der Formel (II)

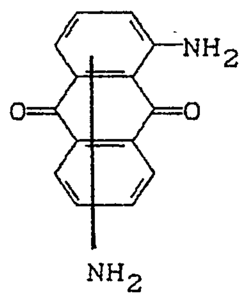

(II)

in der
die $NH_2$-Gruppe in 4-, 5- oder 8-Stellung am Anthrachinonring steht,
in Gegenwart eines sekundären oder tertiären Amins, das stärker basisch ist als die Aminoanthrachinone, als Katalysator und gegebenenfalls in Gegenwart eines aromatischen oder hydroaromatischen Kohlenwasserstoffs, eines Amids oder Sulfons als Lösungsmittel, umsetzt.

2. Verfahren gemäß Anspruch 1, dadurch gekennzeichnet, daß man als Katalysator Triethylamin, Tributylamin oder 1,4-Diazabicyclo [2.2.2]octan einsetzt.

3. Verfahren gemäß den Ansprüchen 1 und 2, dadurch gekennzeichnet, daß man bei 100 bis 220° C arbeitet.

4. Verfahren gemäß den Ansprüchen 1 bis 3, dadurch gekennzeichnet, daß man in Gegenwart von Nitrobenzol oder 1,2-Dichlorbenzol arbeitet.

5. Verfahren zur Herstellung von Küpenfarbstoffen der Formel (III)

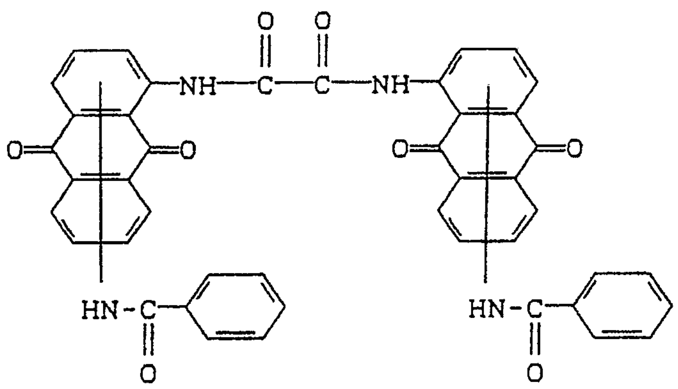

(III)

in welcher
die Benzoylaminogruppen in 4-, 5- oder 8-Stellung der Anthrachinonringe stehen,
dadurch gekennzeichnet, daß man gemäß den Ansprüchen 1 bis 4 hergestellte Oxamide gegebenenfalls ohne Zwischenisolierung in an sich bekannter Weise benzoyliert.

## Claims

1. Process for the preparation of oxamides of the formula (I)

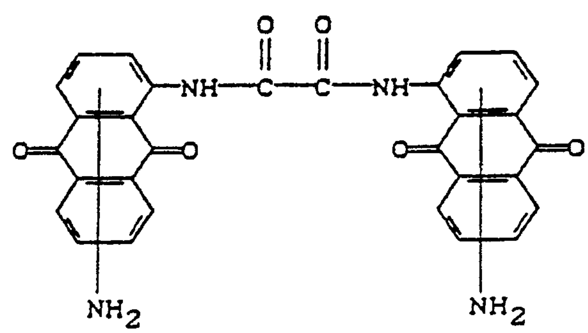

(I)

in which
the $NH_2$ groups are in the 4-, 5-, or 8-position on the anthraquinone ring, characterized in that oxalic acid esters are reacted with aminoanthraquinones of the formula (II)

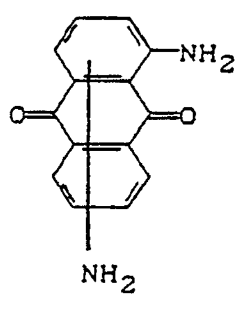

(II)

in which
the $NH_2$ group is in the 4-, 5- or 8-position on the anthraquinone ring, in the presence of a secondary or tertiary amine, which is more strongly basic than the aminoanthraquinones, as a catalyst and if appropriate in the presence of an aromatic or hydroaromatic hydrocarbon, an amide or sulphone as a solvent.

2. Process according to Claim 1, characterized in that triethylamine, tributylamine or 1,4-diazabicyclo-[2.2.2]-octane is employed as the catalyst.

3. Process according to Claims 1 and 2, characterized in that it is carried out at 100-220 °C.

4. Process according to Claims 1 to 3, characterized in that it is carried out in the presence of nitrobenzene or 1,2-dichlorobenzene.

5. Process for the preparation of vat dyestuffs of the formula (III)

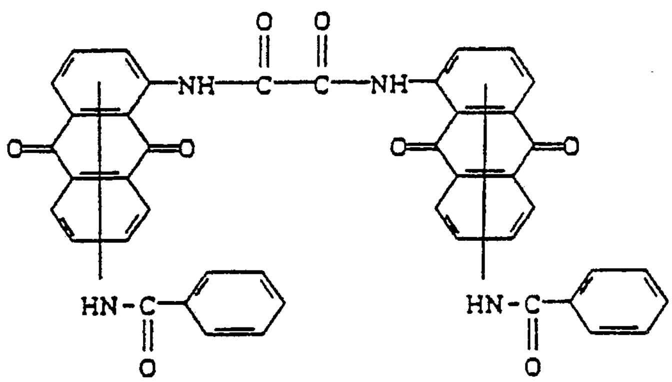

(III)

in which
the benzoylamino groups are in the 4-, 5- or 8-position of the anthraquinone rings,
characterized in that oxamides prepared according to Claims 1 to 4 are benzoylated in a manner known per se, if appropriate without intermediate isolation.

## Revendications

1. Procédé pour préparer des oxamides de formule (I):

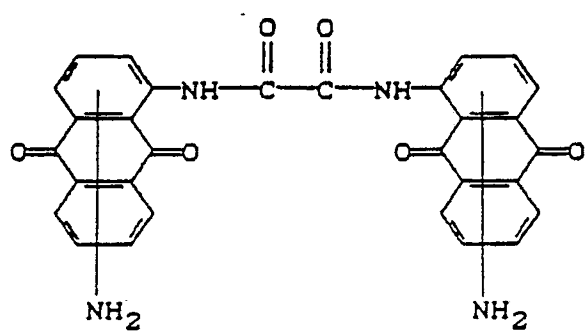

(I)

dans laquelle
les groupes $NH_2$ sont en position 4, 5 ou 8 du noyau antraquinonique,
procédé caractérisé en ce qu'on fait réagir un ester d'acide oxalique avec des aminoanthraquinones de formule (II) :

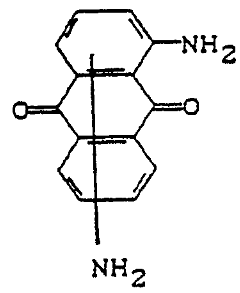

(II)

dans laquelle le groupe $NH_2$ se trouve en position 4, 5 ou 8 sur le noyau anthraquinone, en opérant en présence d'une amine secondaire ou tertiaire, qui est plus fortement basique que l'aminoanthraquinone, comme catalyseur et éventuellement en présence d'un hydrocarbure aromatique ou hydro-aromatique, d'un amide ou d'une sulfone comme solvant.

2. Procédé selon la revendication 1, caractérisé en ce qu'on utilise comme catalyseur la triéthylamine, la tributylamine ou le 1,4-diazabicyclo [2,2,2]octane.

3. Procédé selon les revendications 1 et 2, caractérisé en ce qu'on travaille à une température de 100 jusqu'à 220 °C.

4. Procédé selon les revendications 1 à 3, caractérisé en ce qu'on travaille en présence de nitrobenzène ou du 1,2-dichlorobenzène.

5. Procédé pour préparer des colorants pour cuve, de formule (III) :

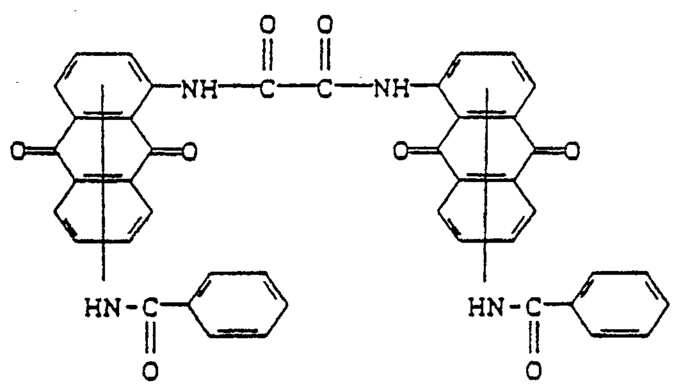

(III)

dans laquelle
les groupes benzoylamino sont en position 4, 5 ou 8 du noyau anthraquinone,
procédé caractérisé en ce qu'on soumet des oxamides, préparés selon les revendications 1 à 4, à une benzoylation effectuée de façon connue en soi, éventuellement sans isolement intermédiaire.